# EUROPÄISCHE PATENTSCHRIFT

(11) **EP 2 924 839 B1**
(45) Veröffentlichungstag und Bekanntmachung des Hinweises auf die Patenterteilung: **21.09.2016**
(21) Anmeldenummer: 15158984.3
(22) Anmeldetag: 13.03.2015
(51) Int. Cl.: H02J 3/00, H02M 7/48, H02J 9/00, H02J 3/38, H02M 7/42, H02J 9/06, H02M 7/487

(54) **EINPHASIGER NOTBETRIEB EINES DREIPHASIGEN WECHSELRICHTERS UND ENTSPRECHENDER WECHSELRICHTER**
SINGLE-PHASE EMERGENCY OPERATION OF A THREE-PHASE INVERTER AND CORRESPONDING INVERTER
RÉGIME DE SECOURS MONOPHASÉ D'UN ONDULEUR TRIPHASÉ ET ONDULEUR CORRESPONDANT

(30) Priorität: 26.03.2014 DE 102014104216
(43) Veröffentlichungstag der Anmeldung: 30.09.2015
(73) Patentinhaber: SMA Solar Technology AG, 34266 Niestetal (DE)
(72) Erfinder: ALLERT, Claus, 34260 Kaufungen (DE); CORREA VASQUEZ, Pablo Ignacio, 97616 Bad Neustadt an der Saale (DE); GEHRKE, Christian, 34127 Kassel (DE); MUELLER, Tobias, 34266 Niestetal (DE); STEIPER, Florian, 34119 Kassel (DE); WACHENFELD, Volker, 34369 Hofgeismar (DE)

(56) Entgegenhaltungen:
- EP-A1- 1 286 455
- EP-A2- 1 226 996
- EP-A2- 1 443 634
- US-A1- 2005 018 460
- US-A1- 2013 155 736

## Beschreibung

Die Erfindung betrifft ein Verfahren zum Betrieb eines Wechselrichters, insbesondere eines Photovoltaik-Wechselrichters, um in einem Notbetrieb eine einphasige AC-Leistung zur Versorgung von Verbrauchern zur Verfügung zu stellen, sowie einen Wechselrichter, der mittels des Verfahrens in einem Notbetrieb eine einphasige AC-Leistung zur Versorgung von Verbrauchern zur Verfügung stellt.

Wechselrichter zur Umformung der elektrischen Leistung einer Gleichstromquelle, hier DC-Leistung genannt (DC von englisch: Direct Current), wie beispielsweise einer Batterie, eines Photovoltaikgenerators oder dergleichen in Wechselstrom bzw. einer zugehörigen Leistung, hier AC-Leistung (AC von englisch: Alternating Current), genannt, wie sie von der überwiegenden Mehrzahl der Verbraucher zu deren Betrieb benötigt wird, sind seit langem bekannt.
Die Mehrzahl der Wechselrichter, die DC-Leistung eines Photovoltaikgenerators umformen, hier Photovoltaikwechselrichter genannt, speisen in ein größeres Verbundnetz ein. Die Verbraucher eines Haushalts, Industriebetriebes oder ähnliches sind ebenfalls an dieses Verbundnetz angeschlossen und benötigen je nach Leistungsaufnahme unterschiedliche Spannungen zu ihrem Betrieb.

Die Betreiber von dezentralen Energiequellen, zum Beispiel Hausbesitzer oder Eigentümer eines Industrieunternehmens, die lokal -am Ort ihres Hauses oder Industrieunternehmens- Energie erzeugen und im netzgebundenen Betrieb in das Verbundnetz einspeisen, möchten im Falle eines Ausfalles des Verbundnetzes zumindest wichtige Verbraucher weiterbetreiben. Meist stellt sich das Problem, dass die Leistungsabgabe der lokal vorhandenen Quellen meist nur zum Betrieb eines Teiles der Verbraucher ausreicht.
Zur Versorgung von Verbrauchern bei Verbundnetzausfall sind sogenannte Backup-Systeme oder "unterbrechungsfreie Stromversorgungen" bekannt, beispielhaft sei hier die DE 10 2011 000 394 A1 genannt. Dabei wird meist eine Batterie und ein weiterer Wechselrichter an das lokale Netz der Hauses oder des Industriebetriebes angeschlossen, um nach Ausfall des Verbundnetzes und nach Trennung des lokalen Netzes vom Verbundnetz mittels des weiteren Wechselrichters ein lokales Inselnetz zu stellen und mit der in der Batterie gespeicherten Energie eine Grundlast abzudecken. Dies bedeutet, dass einige Verbraucher sicher mit der gespeicherten Energie versorgt werden können. Gleichzeitig ermöglicht das lokale Netz den Photovoltaikwechselrichtern, wieder in ein Netz einzuspeisen, ohne dass diese ihre Regelung an die Inselsituation anpassen müssen.
Weiterhin zeigt die Druckschrift DE 10 2005 008 809 A1 einen Wechselrichter zur Einspeisung in ein Stromnetz, dessen drei Brückenzweige einzeln zu- und abschaltbar sind. Einen vergleichbaren Wechselrichter offenbart die Druckschrift US 2011/0267857, der wahlweise eine einphasige, eine zweiphasige oder eine dreiphasige Einspeisung in ein Netz realisieren kann.
Weiterhin zeigt die Druckschrift EP 1 286 455 A1 einen PWM Cycloconverter, über den ein Aufzugsmotor bei Ausfall eines Versorgungsnetzes unterbrechungsfrei weiter aus einer Ersatzquelle wie einer Batterie versorgt wird. Auf einen Motorumrichter eines elektrischen Gabelstaplers ist hingegen die Druckschrift EP 1 226 996 A2 gerichtet, wobei die Brückenzweige des Motorumrichters modular aufgebaut und wechselbar sind, und wobei ein Brückenzweig auch als Bremschopper eines DC-Motors nutzbar ist.
Demgegenüber zeigt die Druckschrift DE 199 37 410 A1 als nächstliegender Stand der Technik einen dreiphasigen Wechselrichter mit Hochfrequenz-Transformator für einen wahlweisen Netz- und Inselbetrieb.

Es besteht weiterhin Bedarf danach, die lokale Energieversorgung von Verbrauchern trotz Ausfall eines Verbundnetzes sicherzustellen, ohne aber zusätzliche Wechselrichter und Batterien vorsehen zu müssen.
Es ist daher Aufgabe der vorliegenden Erfindung, ein verbessertes Verfahren zur Energieversorgung von Verbrauchern bei Ausfall des Verbundnetzes anzugeben, sowie einen Wechselrichter bereitzustellen, der zum Betrieb mit diesem Verfahren eingerichtet ist.

Diese Aufgabe wird gelöst durch ein Verfahren nach Anspruch 1, sowie durch einen Wechselrichter nach Anspruch 8. Weiterbildungen und vorteilhafte Ausgestaltungen sind in den abhängigen Ansprüchen angegeben.

Ein erfindungsgemäßes Verfahren ist zum Umwandeln von DC-Leistung einer Quelle in AC-Leistung mittels eines Wechselrichters, umfassend drei Brückenzweige mit jeweils einem Phasenausgang, eingerichtet. Die DC-Leistung wird bevorzugt durch einen Photovoltaikgenerator zur Verfügung gestellt. In einem netzgebundenen Betrieb werden die Brückenzweige derart angesteuert, dass die AC-Leistung als dreiphasige netzkonforme Leistung in ein Verbundnetz eingespeist wird. Als dreiphasig werden hier Systeme bezeichnet, die mit drei Wechselströmen bzw. Wechselspannungen gleicher Frequenz arbeiten, welche zueinander in ihren Phasenwinkeln um 120° verschoben sind, wobei in diesen, auch als "Drehstromsystem" bekannten Systemen, der Sternpunkt nicht geerdet sein muss. Mit netzkonformen Bedingungen soll gemeint sein, dass die Bedingungen des Netzbetreibers (Grid Code) am Ort der Einspeisung eingehalten werden.
Ist der Wechselrichter vom Verbundnetz getrennt, beispielsweise weil das Verbundnetz gestört, fehlerhaft oder abgeschaltet ist, wird ein Notbetrieb realisiert. Durch einen Betrieb von zwei der drei Wechselrichterbrückenzweige wird die AC-Leistung als einphasiges Inselnetz an zwei der drei Phasenausgänge bereitgestellt. Dieser Betrieb wird hier auch als Inselbetrieb bezeichnet. In diesem Inselbetrieb wird von dem Wechselrichter ein einphasiges Inselnetz aufgebaut, was bedeutet, dass Spannungshöhe und Frequenz nun von dem Wechselrichter vorgegeben wird. So können einphasige Verbraucher versorgt werden.
Vorteilhaft wird von einem Teil der in dem Wechselrichter vorhandenen Wechselrichterbrückenzweige ein einphasiges Inselnetz bereitgestellt, ohne dass weitere Bauteile oder Geräte benötigt würden.

In einer vorteilhaften Ausgestaltung des erfindungsgemäßen Verfahrens werden in dem netzgebundenen Betrieb die drei Brückenzweige des Wechselrichters in einem ersten Taktverfahren angesteuert. In einem Inselbetrieb werden zwei der drei Wechselrichterbrückenzweige in einem zweiten Taktverfahren angesteuert, wobei das erste und das zweite Taktverfahren unterschiedlich sind. So wird mit derselben Wechselrichterbrücke, bestehend aus drei Brückenzweigen, nur mittels unterschiedlicher Taktverfahren im netzgebundenen Betrieb eine dreiphasige AC-Leistung eingespeist, während im Inselbetrieb eine einphasige AC-Leistung zur Versorgung von Verbrauchern bereitgestellt wird.

In einer weiteren vorteilhaften Ausgestaltung des erfindungsgemäßen Verfahrens ist eine Scheitelspannung zwischen den zwei Phasenausgängen, an denen einphasiges Inselnetz in dem Inselbetrieb bereitgestellt wird, verschieden von einer Scheitelspannung zwischen denselben zwei Phasenausgängen in dem netzgebundenen Betrieb. Unter der Scheitelspannung wird allgemein der Maximalwert einer Wechselspannung verstanden, Als Bezugsgröße für den Anschluss von Verbrauchern an ein Wechselspannungsnetz wird meist der Effektivwert der Spannung angegeben, Effektivwerte und Scheitelspannung lassen sich in bekannter Weise mittels eines Faktors ineinander umrechnen.
In vielen Ländern ist die Spannung zwischen jeweils zwei Phasenausgängen in einem dreiphasigen Betrieb unterschiedlich zu der Spannung, die einphasige Verbraucher benötigen. So benötigen Verbraucher mit großer Leistungsaufnahme oft einen dreiphasigen Drehstromanschluss, während haushaltsübliche Kleinverbraucher mit einem einphasigen Anschluss betrieben werden.

In einer weiteren vorteilhaften Ausgestaltung des erfindungsgemäßen Verfahrens ist das erste Taktverfahren ein N-Level-Taktverfahren, wobei N>2 und das zweite Taktverfahren ist ein zwei-Level-Taktverfahren. Wegen ihrer größeren Effizienz kommen besonders bei dreiphasigen Systemen häufig Mehr-Level-Topologien zum Einsatz, die mit den entsprechenden Taktverfahren betrieben werden. Im Inselbetrieb wird ein Teil der Schalter nicht getaktet, und es wird auf ein zwei-Level-Taktverfahren umgestellt.

In einer anderen vorteilhaften Ausgestaltung des erfindungsgemäßen Verfahrens wird in dem Inselbetrieb die einphasige AC-Leistung an demselben Anschlusspunkt für Verbraucher bereitgestellt wie im netzgebundenen Betrieb. Nachdem die Trennung vom Verbundnetz erfolgt ist, können lokal die Phasenausgänge so auf die Zuleitungen der Verbraucher geschaltet werden, dass die Verbraucher nicht an eine spezielle Steckdose umgesteckt werden müssen. Sie verbleiben an Ihren Platz und werden von derselben Zuleitung der Hausinstallation versorgt.

In einer Variante des erfindungsgemäßen Verfahrens werden in dem Inselbetrieb die zwei Phasenausgänge, die die einphasige AC-Leistung bereitstellen, auf einen anderen Ausgang geschaltet. Lassen Anschlussbedingungen von Aufsichtsbehörden eine Umschaltung der Zuleitungen, so wie oben erwähnt, nicht zu oder ist wie beispielsweise in Japan eine vom restlichen Netz getrennte Versorgung in dem Inselbetrieb gefordert, kann die einphasige AC-Leistung auch auf einen anderen, beispielsweise von der restlichen Hausinstallation separierten, Ausgang geschaltet werden. Auf diese Weise sind keine Änderungen an der bestehenden Hausinstallation nötig.

In einer weiteren vorteilhaften Ausgestaltung des erfindungsgemäßen Verfahrens wird in dem Inselbetrieb einer der Phasenausgänge mit dem Erdpotential verbunden. In vielen Ländern werden einphasige Verbraucher zwischen einer Phase und einem geerdeten Neutralleiter betrieben. Zur Bereitstellung einer dreiphasigen AC-Leistung ist eine Verbindung zu einem Neutralleiter nicht nötig. Soll nun im Inselbetrieb eine einphasige AC-Leistung mit Neutralleiterbezug bereitgestellt werden, so muss eine Verbindung von einem der Phasenausgänge zum Erdpotential hergestellt werden.

Ein erfindungsgemäßer Wechselrichter wandelt DC-Leistung einer Quelle in AC-Leistung um. Er umfasst drei Brückenzweige mit jeweils einem Phasenausgang. Zwischen der Quelle der DC-Leistung und den Brückenzweigen ist ein Zwischenkreis angeordnet, der beispielweise aus einem oder mehreren Kondensatoren besteht und Energie zwischenzuspeichern vermag. Das Zwischenkreispotential ist gegenüber dem Erdpotential verschiebbar, was insbesondere bedeutet, dass der Zwischenkreis nicht geerdet ist. So benötigt der erfindungsgemäße Wechselrichter keinen Neutralleiteranschluss für den dreiphasigen Betrieb.
In einem netzgebundenen Betrieb werden die Brückenzweige derart angesteuert, dass die AC-Leistung als dreiphasige netzkonforme Leistung in ein Verbundnetz eingespeist wird. In einem Inselbetrieb, d.h. wenn der Wechselrichter vom Verbundnetz getrennt ist, wird die AC-Leistung von zwei der drei Brückenzweige als einphasiges Inselnetz bereitgestellt. Ein erfindungsgemäßer Wechselrichter kann insbesondere ein Photovoltaikwechselrichter sein, der DC-Leistung eines Photovoltaikgenerators an seinem Eingang in AC-Leistung umwandelt und an seinem Ausgang bereitstellt.
Das verschiebbare Zwischenkreispotential bringt Effizienzvorteile beim Betrieb des Wechselrichters, da der Wechselrichter im dreiphasigen Betrieb mit einer geringeren Zwischenkreisspannung betrieben werden kann als bei einem geerdeten Zwischenkreis. Die Zwischenkreisspannung kann der maximalen Potentialdifferenz der drei Phasen entsprechen und das Zwischenkreispotential bezogen auf den Mittelpunkt der dreiphasigen Netzspannung schwingt mit der 3-fachen Netzfrequenz, auch "gleitende Mittelpunktspannung" genannt.

Nach einer vorteilhaften Ausgestaltung des erfindungsgemäßen Wechselrichters ist die Scheitelspannung zwischen den zwei Phasenausgängen, an denen ein einphasiges Inselnetz in dem Inselbetrieb bereitgestellt wird, verschieden von der Scheitelspannung zwischen denselben zwei Phasenausgängen in dem netzgebundenen Betrieb. Da insbesondere Photovoltaikgeneratoren wetterbedingt eine stark schwankende Leistungsabgabe aufweisen, kann es vorteilhaft sein, nur die wichtigsten Verbraucher und hier insbesondere Verbraucher mit einer nicht zu großen Leistungsaufnahme für den Inselbetrieb vorzusehen. Solche Verbraucher werden meist einphasig betrieben und können im Falle eines Ausfalles des Verbundnetzes an dem erfindungsgemäßen Wechselrichter weiterbetrieben werden.

Nach einer weiteren vorteilhaften Ausgestaltung des erfindungsgemäßen Wechselrichters sind die Brückenzweige aus mindestens zwei Halbleiterschaltern aufgebaut. So könnte ein erfindungsgemäßer Wechselrichters mit der sogenannten B6-Topologie aufgebaut werden. Bevorzugt kommen bekannte drei oder mehr-Level-Topologien wie "Neutral Point Clamped" (NPC), "Bipolar Switch Neutral Point Clamped" (BSNPC), "Active Neutral Point Clamped" (ANPC) oder "Flying Capacitor" (FLC) zum Einsatz, die wesentlich mehr Halbleiterschaltern benötigen, aber oft Vorteile bezüglich ihrer Effizienz aufweisen.

In dem Inselbetrieb kann die AC-Leistung durch den Betrieb von je zwei Schaltern in jedem der zwei Brückenzweige, die im Inselbetrieb eingesetzt werden, bereitgestellt werden. Die übrigen Schalter können geöffnet werden, zumindest werden sie jedoch nicht getaktet, um die einphasige AC-Leistung zu formen. So können beispielsweise in zwei der drei Brückenzweige je zwei Schalter als sogenannte H4-Brücke getaktet werden.

In einer Variante des erfindungsgemäßen Wechselrichters wird in dem Inselbetrieb die einphasige AC-Leistung auf denselben Anschlusspunkt für Verbraucher geschaltet, an dem diese auch im netzgebundenen Betrieb angeschlossen sind. So können die Verbraucher beispielsweise an derselben Steckdose betrieben werden wie im netzgebundenen Betrieb. Dazu weist der Wechselrichter eine Schalteinrichtung zur Herstellung einer Verbindung zwischen den zweien der drei Brückenzweige, an denen die einphasigen AC-Leistung in dem Inselbetrieb bereitgestellt wird, und einem Anschlusspunkt für Verbraucher auf. Nachdem die Trennung vom Verbundnetz erfolgt ist, können in einem lokalen Netz die Phasenausgänge so auf die Zuleitungen der Verbraucher geschaltet werden, dass die Verbraucher nicht an eine spezielle Steckdose umgesteckt werden müssen. Sie verbleiben an Ihren Platz und werden von derselben Zuleitung der Hausinstallation versorgt.

Nach einer weiteren vorteilhaften Ausgestaltung des erfindungsgemäßen Wechselrichters erfolgt eine Umschaltung der einphasigen AC-Leistung in dem Inselbetrieb auf einen vom übrigen lokalen Netz getrennten, anderen Anschlusspunkt für die Verbraucher. Lassen Anschlussbedingungen von Aufsichtsbehörden eine Umschaltung der Zuleitungen nicht zu oder ist, wie Japan, eine vom restlichen Netz getrennte Versorgung in dem Inselbetrieb gefordert, kann die einphasige AC-Leistung auch auf einen anderen Ausgang, beispielsweise eine in einem separaten Gehäuse untergebrachte Steckdose, geschaltet werden. Auf diese Weise sind keine Änderungen an der bestehenden Hausinstallation nötig, die separate Steckdose kann über ein Kabel mit dem Wechselrichter verbunden und bei Bedarf automatisch oder manuell aktiviert werden.

Im Folgenden wird die Erfindung anhand von Ausführungsbeispielen mit Hilfe von Figuren näher erläutert.

Die Figuren zeigen:
- Figur 1: zeigt als erstes erfindungsgemäßes Ausführungsbeispiel einen Wechselrichter mit B6-Topologie
- Figur 2 a, b: zeigt eine erfindungsgemäße Ausgestaltungen der Taktverfahren zur Ansteuerung der Schalter der Brückenzweige
- Figur 3: zeigt als weiteres erfindungsgemäßes Ausführungsbeispiel einen Wechselrichter mit einer Schalteinrichtung
- Figur 4: zeigt als weiteres erfindungsgemäßes Ausführungsbeispiel einen Wechselrichter in BSNPC-Topologie

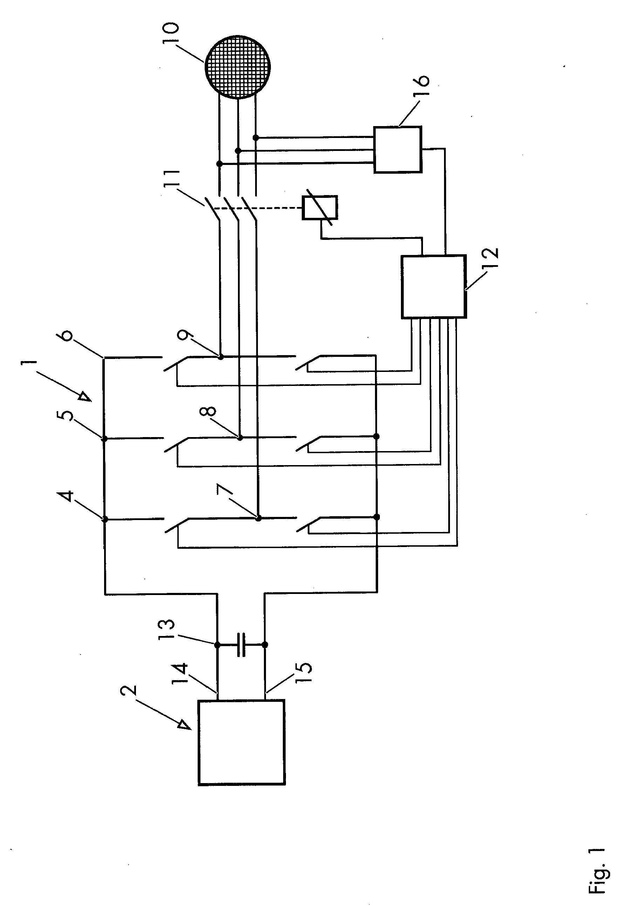

Figur 1 zeigt als erstes Ausführungsbeispiel einen Wechselrichter 1 mit drei Brückenzweigen 4, 5, 6 der zur Ausführung des erfindungsgemäßen Verfahrens geeignet ist. Die Brückenzweige 4, 5, 6 bestehen hier aus jeweils zwei in Reihe geschalteten Schaltern, in der Regel sind dies Halbleiterschalter, beispielsweise IGBT. Diese Schalteranordnung wird auch B6-Topologie genannt. In einem netzgebundenen Betrieb, das heißt bei geschlossenem Trennschalter 11, werden die beiden Schalter der Brückenzweige 4, 5, 6 von einer Steuerung 12 so getaktet betrieben, dass an den Phasenausgängen 7, 8, 9, die sich hier zwischen den beiden Schaltern der jeweiligen Brückenzweige 4, 5, 6 befinden, eine netzkonforme Leistung in ein Verbundnetz 10 eingespeist wird. Die Energie wird dabei von einer Quelle 2 bereitgestellt, die eine DC-Leistung erbringen kann, wie beispielsweise eine Batterie oder ein Photovoltaikgenerators. Wenn es sich um eine wiederaufladbare Batterie handelt, kann Energie aufgenommen und ausgegeben werden, in diesem Fall muss der Wechselrichter 1 für einen bidirektionalen Betrieb eingerichtet sein. Die von der Quelle 2 bereitgestellte DC-Leistung wird in der Regel von einem Zwischenkreis 13 gepuffert.

Das Verbundnetz 10 wird als dreiphasiges Netz angenommen, daher gibt der Wechselrichter 1 an den drei Phasenausgängen 7, 8, 9 eine dreiphasige AC-Leistung aus, deren Höhe und Frequenz vom Verbundnetz 10 vorgegeben wird. Das Verbundnetz 10 kann hierbei einen geerdeten Sternpunkt aufweisen, kann aber auch ungeerdet sein. Der Wechselrichter 1 ist ungeerdetet, das heißt erweist keine Verbindung zum Erdpotential auf, insbesondere ist er nicht in 4-Leiter-Topologie ausgeführt und weist keinen Zwischenkreis-Mittelpunkt auf, der als Anschluss nach außen geführt und mit einem Neutralleiter verbunden wäre.

Eine Netzüberwachungseinrichtung 16 überwacht den Zustand des Verbundnetzes 10, indem z. B. Spannung, Frequenz und/oder Phasenlage des Verbundnetzes 10 gemessen und mit normativen oder Netzbetreiber-Vorgaben verglichen werden. Auf diese Weise kann ein Ausfall des Verbundnetzes 10 detektiert und der Steuerung 12 durch eine drahtlose oder drahtgebundene Kommunikationsverbindung übermittelt werden. Wird ein Ausfall des Verbundnetzes 10 detektiert, kann der Wechselrichter 1 mittels Trennschalter 11 vom Verbundnetz 10 getrennt werden. Dies kann sowohl automatisch, z. B. ausgelöst durch die Steuerung 12, oder manuell geschehen. Nach erfolgter Trennung des Wechselrichters 1 vom Verbundnetz 10 wird nach dem erfindungsgemäßen Verfahren einphasiges Inselnetz an zwei der drei Phasenausgänge 7, 8, 9 bereitgestellt, beispielsweise an den Phasenausgängen 7 und 8. Dazu werden Spannung und Frequenz der bereitgestellten einphasigen Energieversorgung von dem Wechselrichter 1 vorgegeben.
Da die meisten haushaltsüblichen Verbraucher mit einer einphasigen Spannung betrieben werden können, können diese auch bei Ausfall des Verbundnetzes 10 mit Energie versorgt werden. Dazu müssen sie mit den im Notbetrieb mit AC-Leistung versorgten Phasenausgängen verbunden sein oder werden, in diesem Ausführungsbeispiel mit den Phasenausgängen 7 und 8.

In vielen Verbundnetzen werden einphasige Verbraucher mit Energie versorgt, indem die sie mit einer Phase und dem Erdpotential verbunden werden. Das Verbundnetz selbst ist oft ein Drehstromnetz, das mit drei Wechselströmen bzw. Wechselspannungen gleicher Frequenz arbeitet, welche zueinander in ihren Phasenwinkeln um 120° verschoben sind. Die Spannungen zwischen zwei Phasen, beispielsweise 360 V_{eff}, sind dann meist westlich größer als die Spannung von einer Phase gegen Erde, beispielsweise 220 V_{eff}, weshalb Verbraucher mit einer größeren Leistungsaufnahme meist an allen drei Phasen angeschlossen werden. Diese Verbraucher können bei Verwendung des erfindungsgemäßen Verfahrens in dem Notbetrieb nicht betrieben werden.

In der Regel muss daher sowohl die Spannungshöhe als auch die Phasenlage zwischen den Phasenausgängen 7, 8, an denen die einphasigen AC-Leistung in dem Inselbetrieb bereitgestellt wird, bei Beginn des Notbetriebes umgestellt werden. Dazu muss das Taktmuster, nach dem die Schalter der Brückenzweige 4, 5, 6 angesteuert werden, verändert werden.

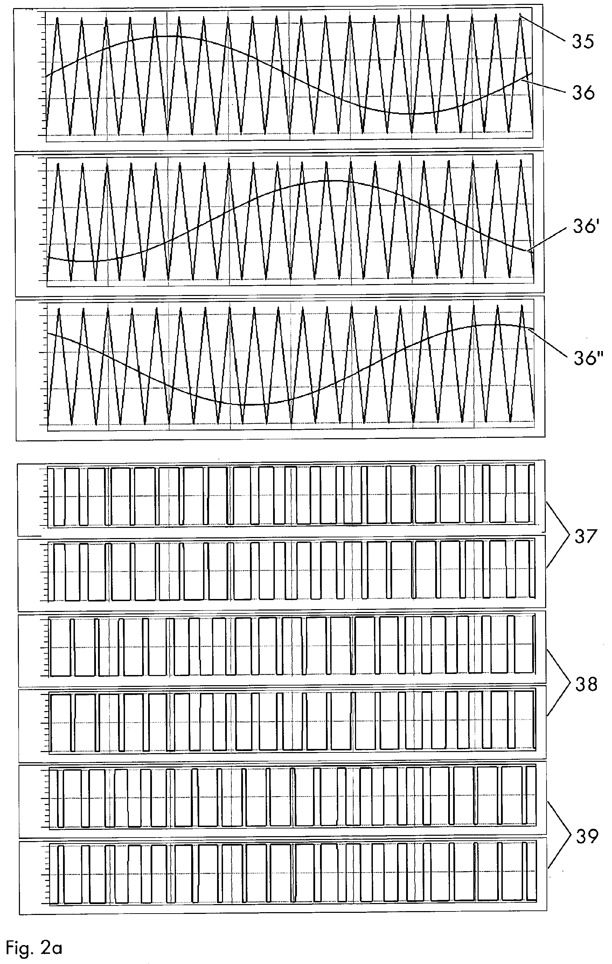

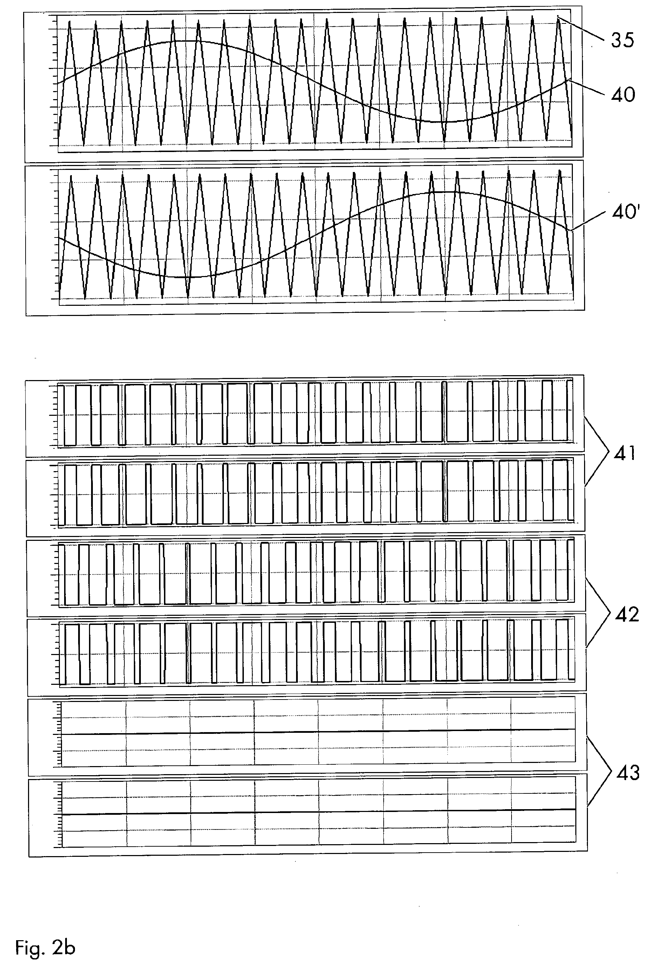

Figur 2 a zeigt eine mögliche Ausgestaltung des Taktverfahrens zur Ansteuerung der Schalter des Wechselrichters 1 in einem netzgebundenen Betrieb. Ist der Wechselrichters 1 beispielsweise nach Figur 1 aufgebaut, können PWM-Signale zur Ansteuerung der Schalter der Brückenzweige 4, 5, 6 durch die Steuerung 12 in an sich bekannter Weise generiert werden, indem ein Referenzsignal 36 mit einem Trägersignal 35 verglichen wird. Die oberen drei Diagramme sind den drei Phasenausgängen 7, 8, 9 zugeordnet. Sie stellen die jeweiligen Eingangsgrößen für die Steuerung 12 dar, wobei die Referenzsignale 36, 36', 36" die Form der gewünschten Ausgangsspannung abbilden. Man sieht, dass die drei Referenzsignale 36, 36', 36" gegeneinander um 120° phasenverschoben sind. Dies führt zur Ausgabe einer dreiphasigen Leistung an den drei Phasenausgängen 7, 8, 9 des Wechselrichters 1. Die Steuerung 12 generiert aus dem Vergleich des jeweiligen Referenzsignals 36 und Trägersignal 35, welches für alle Phasen gleich ist, PWM-Signale 37, 38, 39 für die Brückenzweige 4, 5, 6, wobei beispielsweise die PWM-Signale 37 die Ansteuerung der beiden Schalter des Brückenzweiges 4 darstellen können.

Figur 2b zeigt eine mögliche Ausgestaltung des Taktverfahrens zur Ansteuerung der Schalter des Wechselrichters 1 in einem Notbetrieb. Nach erfolgter Trennung des lokalen Netzes 29 vom Verbundnetz 10 wird auf ein einphasiges Taktverfahren umgestellt. Die oberen zwei Diagramme sind den zwei Phasenausgängen 7, 8 zugeordnet, an denen das einphasige Netz gestellt werden soll. Auch hier stellen ein erstes Referenzsignal 40, ein zweites Referenzsignal 40' und das Trägersignal 35 die jeweiligen Eingangsgrößen für die Steuerung 12 dar. Aus dem ersten Referenzsignal 40 und Trägersignal 35 errechnet die Steuerung 12 die PMW-Signale 41 für die Schalter des Brückenzweiges 4 aus zweiten Referenzsignal 40' und Trägersignal 35 die PMW-Signale 42 des Brückenzweiges 5. Die Schalter des Brückenzweiges 6 werden nicht angesteuert, wie in 43 angedeutet. Die zwei Referenzsignale 40, 40' sind gegeneinander um 180° phasenverschoben.

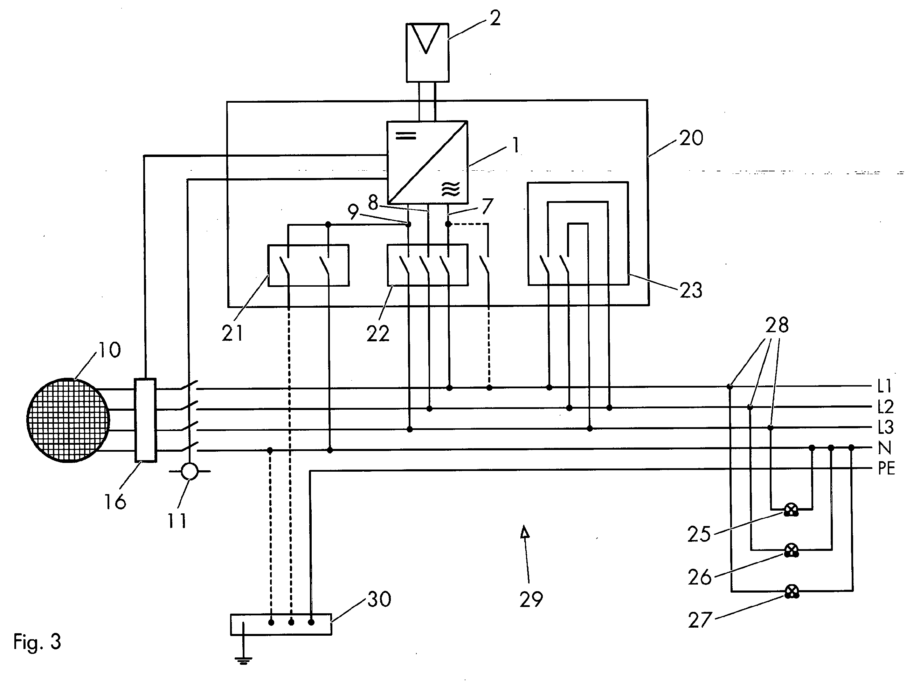

Figur 3 zeigt als weiteres Ausführungsbeispiel einen Wechselrichter 20 mit Schalteinrichtungen 21, 22, 23, der es ermöglicht, Verbraucher 25, 26, 27 an ihren Anschlusspunkten 28 in einem lokalen Netz 29, beispielsweise einer Steckdose einer Hausinstallation, während eines Notbetriebes mit Energie aus einer Quelle 2, beispielsweise einer auf dem Haus befindlichen Photovoltaikanlage, zu versorgen. Dabei werden alle dazu benötigten Schalteinrichtungen 21, 22, 23, beispielsweise als eine bauliche Einheit, bevorzugt im Gehäuse des Wechselrichters 20 untergebracht. Die Schalteinrichtungen 21, 22, 23 können auch als eigenständige Komponenten vorgesehen sein oder, beispielsweise zusammen mit dem Trennschalter 11, im Hausanschlusskasten integriert werden.

In dem netzgebundenen Betrieb, d.h. bei geschlossenem Trennschalter 11, werden die drei Brückenzweige 4, 5, 6 des Wechselrichters 1 so getaktet, dass die DC-Leistung der Photovoltaikanlage 2 an den Phasenausgänge 7, 8, 9 als dreiphasige netzkonforme Leistung ausgegeben wird. Ein Teil der Leistung kann direkt von den Verbrauchern 25, 26, 27 über das lokale Netz 29 bezogen werden, eine anderer in das Verbundnetz 10 eingespeist werden. In dem netzgebundenen Betrieb ist auch das lokale Netz 29 ein dreiphasiges Netz in dem die Verbrauchern 25, 26, 27 auf die drei Phasen aufgeteilt angeschlossen sind, um eine bessere Lastverteilung zu erreichen.

Detektiert die Netzüberwachungseinrichtung 16 einen Ausfall, Störung oder ähnliches des Verbundnetzes 10, trennt sich der Wechselrichter 20 mittels seiner Wechselrichter-Schalteinrichtung 22 vom lokalen Netz 29 und trennt mittels Ansteuerung des Trennschalters 11 allpolig das lokale Netz 29 mit den Verbrauchern 25, 26, 27 vom Verbundnetz 10, um eine spätere Rückspeisung vom Wechselrichter 20 in das Verbundnetzes 10 zu verhindern. Nun stellt das lokale Netz 29 ein lokales Inselnetz dar.

Anschließend wird das Taktverfahren so umgestellt, das durch den Betrieb von zweien der drei Brückenzweige 4, 5, 6 an den zugehörigen zwei Phasenausgängen 7, 9 ein einphasiges Netz aufgebaut wird. Durch die Wechselrichter-Schalteinrichtung 22 wird der Phasenausgang 7 wird mit der Phase L1 des lokalen Netzes 29 verbunden, die Schalter an den Phasenausgängen 8, 9 bleiben geöffnet. Durch die Neutralleiter-Schalteinrichtung 21 wird Phasenausgang 9 mit dem Neutralleiter N verbunden. Aus Sicherheitsgründen, beispielsweise um die Funktion eines RCD (Residual Current Device) zu gewährleisten, kann Phasenausgang 9 auch direkt mit Erde, dem PE-Anschluss, verbunden werden.

Um im lokalen Netz 29 die auf drei Phasen verteilt angeschlossen Verbraucher 25, 26, 27 versorgen zu können, kann eine Kopplungs-Schalteinrichtung 23 eine Verbindung von L2 und L3 des lokalen Netzes 29 nach L1 herstellen, so dass in der Folge alle Verbrauchern 25, 26, 27 mit dem Phasenausgang 7 des Wechselrichters 20 und über ihren Neutralleiteranschluss N mit dem Phasenausgang 9 des Wechselrichters 20 verbunden sind. So sind alle Verbraucher an dieselbe einphasige Spannung des Inselnetzes angeschlossen. Ebenso ist es aber auch denkbar, nur zwei der drei Phasen miteinander zu koppeln, wodurch im Notbetrieb nur ein Teil der Verbraucher versorgt werden würde.

Die Netzüberwachungseinrichtung 16 überwacht weiter den Zustand des Verbundnetzes 10. Wird die Rückkehr zum Normalzustand detektiert, trennt sich der Wechselrichter 20 mittels seiner Wechselrichter-Schalteinrichtung 22 vom lokalen Netz 29, löst mittels Kopplungs-Schalteinrichtung 23 die Verbindung der Phasen L2 und L3 mit L1, löst mittels Neutralleiter-Schalteinrichtung 21 die Verbindung von Phasenausgang 9 mit dem Neutralleiter N und Erde und verbindet das lokale Netz 29 wieder mit dem Verbundnetzes 10. Der Wechselrichter 20 stellt sein Taktverfahren wieder um auf "Normalbetrieb", synchronisiert sich mit dem Verbundnetz 10 und gibt wieder eine dreiphasige netzkonforme Leistung aus.

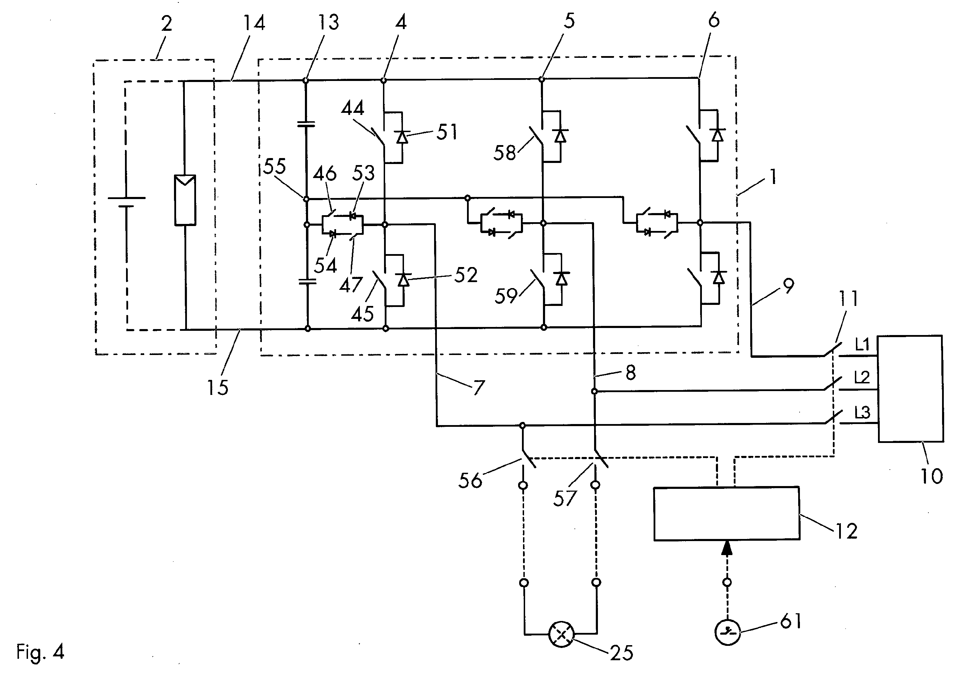

Figur 4 zeigt als weiteres Ausführungsbeispiel einen Wechselrichter 1 mit drei Brückenzweigen 4, 5, 6, der zur Ausführung des erfindungsgemäßen Verfahrens geeignet ist. Der als Puffer für die DC-Leistung fungierende Zwischenkreis 13 ist hier geteilt ausgeführt, d.h. er umfasst mindestens zwei in Reihe geschalteten Kondensatoren. Die Brückenzweige 4, 5, 6 umfassen jeweils zwei in Reihe geschalteten Brückenschalter 44, 45 mit jeweils antiparallel geschalteten Dioden 51, 52, wobei der Verbindungspunkt zwischen den beiden in Reihe geschalteten Brückenschaltern 44, 45 über zwei parallelgeschaltete Reihenschaltungen aus jeweils einem Mittelpunktschalter 46, 47 und einer Diode 53, 54 mit dem Mittelpunkt 55 des geteilten Zwischenkreises 13 verbunden ist. Diese Anordnung der Schalter wird auch als BSNPC (bipolar switched neutral point clamped) Topologie bezeichnet und stellt eine Variante von sogenannten Multi-Level-Wechselrichtern dar -speziell hier "Drei-Level"-, die eine besonders gute Umwandlungseffizienz besitzen.

Im netzgebundenen Betrieb, d.h. bei geschlossenem Trennschalter 11, wird eine dreiphasige netzkonforme Spannung in das Verbundnetz 10 eingespeist. Dabei werden sowohl die Brückenschalter 44, 45 als auch die Mittelpunktschalter 46, 47 von der Steuerung 12 in einem Taktverfahren angesteuert, um die DC-Leistung der Quelle 2 in eine dreiphasige AC-Leistung zu wandeln.
Zum Wechsel auf einen Notbetrieb ist in dieser Ausführungsform ein Anforderungsschalter 61 vorgesehen, mit dem ein Benutzer der Steuerung 12 signalisieren kann, dass ein Notbetrieb gewünscht ist. Die Steuerung 12 kann prüfen, ob ein Netzausfall vorliegt, prinzipiell kann es auch lediglich von der Wahl des Benutzers abhängen, ob auf Notbetrieb umgestellt wird. Vor der Umstellung wird in jedem Fall zunächst der Trennschalter 11 geöffnet, anschließend wird das Taktverfahren so umgestellt, dass an den Phasenausgängen 7, 8 ein einphasiges Netz durch Taktung der Brückenschalter 44, 45, 58, 59 bereitgestellt wird. Die Phasenausgänge 7, 8 werden mittels Notversorgungsschalter 56, 57 auf einen anderen Anschlusspunkt 31 geschaltet. Bis auf den Anforderungsschalter 61 werden alle Schaltvorgänge von der Steuerung 12 ausgelöst.
Der andere Anschlusspunkt 31 kann sich beispielsweise in einem separaten, mobilen Gehäuse mit einer speziellen Steckdose zusammen mit dem Anforderungsschalter 61 befinden. Ist die Notbetrieb-Funktion gewünscht, kann der Benutzer das Gerät 25 seiner Wahl mit dem anderen Anschlusspunkt 31 verbinden und den Anforderungsschalter 61 betätigen. Dann wird die DC-Leistung der Quelle 2, beispielsweise der eigenen privaten PV-Anlage, ausschließlich zur Versorgung des gewählten Gerätes 25 verwendet. Um auf netzgebundenen Betrieb zurückzuschalten, ist wieder der Anforderungsschalter 61 zu betätigen, die Steuerung 12 stellt das Taktverfahren wieder auf dreiphasig um, öffnet die Notversorgungsschalter 56, 57 und schließt den Trennschalter 11.

Soll die Netzeinspeisung das bevorzugte Betriebsverfahren der Anlage sein, kann vor der Bereitstellung des Notbetriebes eine Überprüfung des Zustandes des Verbundnetzes 10 vorgesehen sein und die Betätigung des Anforderungsschalters 61 oder die Funktion der Notversorgungsschalter 56, 57 gesperrt werden für den Fall, dass das Verbundnetz 10 funktionstüchtig ist.

Die hier beschriebene Topologie wird im netzgebundenen Betrieb in einem bekannten Drei-Level-Taktverfahren angesteuert, d.h. die Brückenschalter 44, 45 und die Mittelpunktschalter 46, 47 der jeweiligen Brückenzweige können den jeweiligen Phasenausgang 7 mit drei unterschiedlichen Potentialen verbinden. Diese Potentiale liegen am DC-Pluspol 17, DC-Minuspol 18 und dem Mittelpunkt 55 des geteilten Zwischenkreises an.
Im Notbetrieb wird hier auf ein Zwei-Level-Taktverfahren umgestellt. Dann wird nur noch zwischen den DC-Pluspol 17 und DC-Minuspol 18 mittels der Brückenschalter 44, 45 getaktet, die Mittelpunktschalter 46, 47 können geöffnet verbleiben. Für Details dieser Taktverfahren und deren Umschaltung sei auf die WO 2013/004585 A1 der Anmelderin verwiesen, wo dies zur kurzzeitigen Versorgung von Kondensatoren, die zur Bereitstellung der Energie für die Ansteuerung der Leistungshalbleiterschalter dienen, vorgesehen ist.

In ähnlicher Weise würde auch bei anderen Multi-Level-Topologien zwischen einem netzgebundenen Betrieb in einem Multi-Level-Taktverfahren und einem Notbetrieb in einem Zwei-Level-Taktverfahren umgestellt werden.

### Bezugszeichen liste

- 1: Wechselrichter
- 2: Quelle
- 4, 5, 6: Brückenzweig
- 7,8,9: Phasenausgang
- 10: Verbundnetz
- 11: Trennschalter
- 12: Steuerung
- 13: Zwischenkreis
- 14: DC- Anschluss, DC-Pluspol
- 15: DC- Anschluss, DC-Minuspol
- 16: Netzüberwachungseinrichtung
- 20: Wechselrichter mit Schalteinrichtung
- 21: Neutralleiter-Schalteinrichtung
- 22: Wechselrichter-Schalteinrichtung
- 23: Kopplungs-Schalteinrichtung
- 25, 26, 27: Verbraucher
- 28: Anschlusspunkt
- 29: lokales Netz
- 30: Erdpotential
- 31: anderer Anschlusspunkt
- 35: Trägersignal
- 36, 36', 36": Referenzsignal
- 37, 38, 39: PWM-Signale
- 40, 40': Referenzsignal
- 41,42,43: PWM-Signale
- 44, 45, 58, 59: Brückenschalter
- 46,47: Mittelpunktschalter
- 51, 52, 53, 54: Dioden
- 55: Mittelpunkt
- 56,57: Notversorgungsschalter
- 61: Anforderungsschalter

## Patentansprüche

1. Verfahren zum Umwandeln von DC-Leistung einer Quelle (2) in AC-Leistung mittels eines Wechselrichters (1), umfassend drei Brückenzweige (4, 5, 6) mit jeweils einem Phasenausgang (7, 8, 9), wobei in einem netzgebundenen Betrieb die Brückenzweige (4, 5, 6) derart angesteuert werden, dass die AC-Leistung als dreiphasige netzkonforme Leistung in ein Verbundnetz (10) eingespeist wird,
**gekennzeichnet dadurch, dass**
durch einen Betrieb von zwei der drei Brückenzweige (4, 5, 6) die AC-Leistung als einphasiges Inselnetz an zwei der drei Phasenausgänge (7, 8, 9) bereitgestellt wird, wenn der Wechselrichter (1) vom Verbundnetz (10) getrennt ist.

2. Verfahren nach Anspruch 1, wobei in dem netzgebundenen Betrieb die drei Brückenzweige (4, 5, 6) in einem ersten Taktverfahren angesteuert werden und in dem Inselbetrieb zwei der drei Brückenzweige (4, 5, 6) in einem zweiten Taktverfahren angesteuert werden, wobei das erste und das zweite Taktverfahren unterschiedlich sind.

3. Verfahren nach Anspruch 2, wobei eine Scheitelspannung zwischen den zwei Phasenausgängen (7, 8) an denen das einphasiges Inselnetz in dem Inselbetrieb bereitgestellt wird, verschieden ist von der Scheitelspannung zwischen denselben zwei Phasenausgängen in dem netzgebundenen Betrieb.

4. Verfahren nach Anspruch 2, wobei das erste Taktverfahren ein N-Level-Taktverfahren ist, wobei N>2 und das zweite Taktverfahren ein zwei-Level-Taktverfahren ist.

5. Verfahren nach Anspruch 2, wobei in dem Inselbetrieb die Bereitstellung der einphasigen AC-Leistung an demselben Anschlusspunkt für Verbraucher erfolgt wie im netzgebundenen Betrieb.

6. Verfahren nach Anspruch 2, wobei in dem Inselbetrieb die zwei Phasenausgänge (7, 8, 9) zur Bereitstellung der einphasigen AC-Leistung auf einen anderen Anschlusspunkt (31) geschaltet werden.

7. Verfahren nach Anspruch 5, wobei in dem Inselbetrieb einer der Phasenausgänge (7, 8, 9) mit dem Erdpotential (30) verbunden wird.

8. Wechselrichter (1), insbesondere Photovoltaikwechselrichter, zum Umwandeln von DC-Leistung einer Quelle (2) in AC-Leistung, umfassend drei Brückenzweige (4, 5, 6) mit jeweils einem Phasenausgang (7, 8, 9) und einen Zwischenkreis (13), dessen Potential gegenüber dem Erdpotential (30) verschiebbar ist, wobei in einem netzgebundenen Betrieb die Brückenzweige (4, 5, 6) derart angesteuert werden, dass die AC-Leistung als dreiphasige netzkonforme Leistung in ein Verbundnetz (10) eingespeist wird, **gekennzeichnet dadurch, dass**
in einem Inselbetrieb die AC-Leistung von zwei der drei Brückenzweige (4, 5, 6) als einphasiges Inselnetz bereitgestellt wird, wenn der Wechselrichter (1) vom Verbundnetz (10) getrennt ist.

9. Wechselrichter nach Anspruch 8, wobei eine Scheitelspannung zwischen den zwei Phasenausgängen (7, 8) an denen einphasiges Inselnetz in dem Inselbetrieb bereitgestellt wird, verschieden ist von der Scheitelspannung zwischen denselben zwei Phasenausgängen (7, 8) in dem netzgebundenen Betrieb.

10. Wechselrichter nach Anspruch 8, wobei die Brückenzweige (4, 5, 6) aus Neutral Point Clamped -, Bipolar Switch Neutral Point Clamped -, Active Neutral Point Clamped - oder Flying Capacitor -Zweigen bestehen.

11. Wechselrichter nach Anspruch 10, wobei in dem Inselbetrieb die AC-Leistung durch den Betrieb von je zwei Schaltern in jedem der zwei aus den drei Brückenzweigen (4, 5, 6), an denen die einphasigen AC-Leistung in dem Inselbetrieb bereitgestellt wird, erzeugt wird.

12. Wechselrichter nach einem der Ansprüche 8 bis 11, aufweisend eine Schalteinrichtung (21, 22, 23) zur Herstellung einer Verbindung zwischen den zweien der drei Brückenzweige (4, 5, 6), an denen die einphasigen AC-Leistung in dem Inselbetrieb bereitgestellt wird, und einem Anschlusspunkt (28) für Verbraucher, wobei der Anschlusspunkt (28) derselbe ist wie im netzgebundenen Betrieb.

13. Wechselrichter nach einem der Ansprüche 8 bis 11, aufweisend Notversorgungsschalter (56, 57) zur Herstellung einer Verbindung zwischen den zweien der drei Brückenzweige (4, 5, 6), an denen die einphasigen AC-Leistung in dem Inselbetrieb bereitgestellt wird, und einem anderen Anschlusspunkt (31) für Verbraucher, wobei der andere Anschlusspunkt (31) in dem netzgebundenen Betrieb vom übrigen lokalen Netz (29) getrennt ist.

## Claims

1. Method for converting DC power from a source (2) into AC power by means of an inverter (1) comprising three bridge branches (4, 5, 6), each having a phase output (7, 8, 9), wherein, during grid-connected operation, the bridge branches (4, 5, 6) are actuated in such a way that the AC power is fed, as three-phase grid-compliant power, into an interconnecting grid (10), **characterized in that**
by operation of two of the three bridge branches (4, 5, 6), the AC power is provided, as single-phase island grid, at two of the three phase outputs (7, 8, 9) when the inverter (1) is disconnected from the interconnecting grid (10).

2. Method according to Claim 1, wherein, during grid-connected operation, the three bridge branches (4, 5, 6) are actuated in a first clocking method, and during island-operation, two of the three bridge branches (4, 5, 6) are actuated in a second clocking method, wherein the first and second clocking methods are different.

3. Method according to Claim 2, wherein a peak voltage between the two phase outputs (7, 8) at which the single-phase island grid is provided during island-operation is different from the peak voltage between the same two phase outputs during grid-connected operation.

4. Method according to Claim 2, wherein the first clocking method is an N-level clocking method, wherein N>2, and the second clocking method is a two-level clocking method.

5. Method according to Claim 2, wherein, during island-operation, the provision of the single-phase AC power takes place at the same connection point for consumers as during grid-connected operation.

6. Method according to Claim 2, wherein, during island-operation, the two phase outputs (7, 8, 9) for providing the single-phase AC power are connected to a different connection point (31).

7. Method according to Claim 5, wherein, during island-operation, one of the phase outputs (7, 8, 9) is connected to the ground potential (30).

8. Inverter (1), in particular photovoltaic inverter, for converting DC power from a source (2) into AC power, comprising three bridge branches (4, 5, 6), each having a phase output (7, 8, 9) and a DC link (13), whose potential is floating with respect to the ground potential (30), wherein, during grid-connected operation, the bridge branches (4, 5, 6) are actuated in such a way that the AC power is fed, as three-phase grid-compliant power, into an interconnecting grid (10),
**characterized in that**
during island-operation, the AC power is provided by two of the three bridge branches (4, 5, 6) as single-phase island grid when the inverter (1) is disconnected from the interconnecting grid (10).

9. Inverter according to Claim 8, wherein a peak voltage between the two phase outputs (7, 8) at which the single-phase island grid is provided during island-operation is different from the peak voltage between the same two phase outputs (7, 8) during grid-connected operation.

10. Inverter according to Claim 8, wherein the bridge branches (4, 5, 6) consist of Neutral Point Clamped -, Bipolar Switch Neutral Point Clamped -, Active Neutral Point Clamped - or Flying Capacitor -branches.

11. Inverter according to Claim 10, wherein, during island-operation, the AC power is generated by the operation of in each case two switches in each of the two of the three bridge branches (4, 5, 6) at which the single-phase AC power is provided during island-operation.

12. Inverter according to one of Claims 8 to 11, having a switching device (21, 22, 23) for producing a connection between the two of the three bridge branches (4, 5, 6) at which the single-phase AC power is provided during islandoperation and a connection point (28) for consumers, wherein the connection point (28) is the same as during grid-connected operation.

13. Inverter according to one of Claims 8 to 11, having emergency supply switches (56, 57) for producing a connection between the two of the three bridge branches (4, 5, 6) at which the single-phase AC power is provided during island-operation and another connection point (31) for consumers, wherein the other connection point (31) is disconnected from the rest of the local grid (29) during grid-connected operation.

## Revendications

1. Procédé de conversion de puissance DC d'une source (2) en puissance AC au moyen d'un onduleur (1), comprenant trois branches de pont (4, 5, 6) dotées respectivement d'une sortie de phase (7, 8, 9), dans lequel, en fonctionnement lié au réseau, les branches de pont (4, 5, 6) sont commandées de manière à ce que la puissance AC est injectée sous forme de puissance triphasée conforme au réseau dans un réseau interconnecté (10),
**caractérisé en ce que**,
la puissance AC est prévue sous forme d'un réseau à îlot monophasé à deux des trois sorties de phase (7, 8, 9) par un fonctionnement de deux des trois branches de pont (4, 5, 6) lorsque l'onduleur (1) est séparé du réseau interconnecté (10).

2. Procédé selon la revendication 1, dans lequel, en fonctionnement lié au réseau, les trois branches de pont (4, 5, 6) sont commandées dans un premier procédé de commutation et, en fonctionnement en îlot, deux des trois branches de pont (4, 5, 6) sont commandées dans un second procédé de commutation, le premier et le second procédé de commutation étant différents.

3. Procédé selon la revendication 2, dans lequel une tension de crête entre les deux sorties de phase (7, 8) auxquelles le réseau d'îlot monophasé est prévue en fonctionnement en îlot est différente de la tension de crête entre les mêmes deux sorties de phase en fonctionnement lié au réseau.

4. Procédé selon la revendication 2, dans lequel le premier procédé de commutation est un procédé de commutation de niveau N, sachant qu'on a N>2, et que le second procédé de commutation est un procédé de commutation de niveau deux.

5. Procédé selon la revendication 2, dans lequel, en fonctionnement en îlot, l'apport de la puissance monophasée AC se fait au même point de raccordement pour les consommateurs qu'en fonctionnement lié au réseau.

6. Procédé selon la revendication 2, dans lequel, en fonctionnement en îlot, les deux sorties de phase (7, 8, 9) sont commutées pour apporter la puissance monophasée AC à un autre point de raccordement (31).

7. Procédé selon la revendication 5, dans lequel, en fonctionnement en îlot, une des sorties de phase (7, 8, 9) est reliée au potentiel de terre (30).

8. Onduleur (1), en particulier onduleur photovoltaïque, pour la conversion de puissance DC d'une source (2) en puissance AC, comprenant trois branches de pont (4, 5, 6) dotées respectivement d'une sortie de phase (7, 8, 9) et un circuit intermédiaire (13), dont le potentiel peut bouger par rapport au potentiel de terre (30), dans lequel, dans un fonctionnement lié au réseau, les branches de pont (4, 5, 6) sont commandées de manière à ce que la puissance AC est injectée sous forme de puissance triphasée conforme au réseau dans un réseau interconnecté (10),
**caractérisé en ce que**,
en fonctionnement en îlot, la puissance AC est prévue par deux des trois branches de pont (4, 5, 6) sous forme de réseau d'îlot monophasé lorsque l'onduleur (1) est séparé du réseau interconnecté (10) .

9. Onduleur selon la revendication 8, dans lequel une tension de crête entre les deux sorties de phase (7, 8) auxquelles un réseau d'îlot monophasé est prévue en fonctionnement en îlot est différente de la tension de crête entre les mêmes deux sorties de phase (7, 8) en fonctionnement lié au réseau.

10. Onduleur selon la revendication 8, dans lequel les branches de pont (4, 5, 6) sont composées de branches Neutral Point Clamped, Bipolar Switch Neutral Point Clamped, Active Neutral Point Clamped ou Flying Capacitor.

11. Onduleur selon la revendication 10, dans lequel, en fonctionnement en îlot, la puissance AC est générée par le fonctionnement à chaque fois de deux commutateurs dans chacune des deux parmi les trois branches de pont (4, 5, 6) auxquelles la puissance monophasée AC est prévue en fonctionnement en îlot.

12. Onduleur selon une des revendications 8 à 11, présentant un dispositif de commutation (21, 22, 23) pour établir une liaison entre deux des trois branches de pont (4, 5, 6) auxquelles la puissance monophasée AC est prévue en fonctionnement en îlot et un point de raccordement (28) pour les consommateurs, le point de raccordement (28) étant le même qu'en fonctionnement lié au réseau.

13. Onduleur selon une des revendications 8 à 11, présentant des commutateurs d'alimentation d'urgence (56, 57) pour établir une liaison entre les deux des trois branches de pont (4, 5, 6) auxquelles la puissance monophasée de AC est prévue en fonctionnement en îlot et un autre point de raccordement (31) pour les consommateurs, l'autre point de raccordement (31) étant, en fonctionnement lié au réseau, séparé du reste du réseau local (29).
